# EUROPÄISCHE PATENTSCHRIFT

(11) **EP 4 045 860 B1**
(45) Veröffentlichungstag und Bekanntmachung des Hinweises auf die Patenterteilung: **28.06.2023**
(21) Anmeldenummer: 20789128.4
(22) Anmeldetag: 12.10.2020
(51) Int. Cl.: F27B 7/38, C04B 7/47, F27D 15/02

(54) **KÜHLER UND VERFAHREN ZUM KÜHLEN VON SCHÜTTGUT**
COOLER AND A METHOD FOR COOLING BULK MATERIAL
REFROIDISSEUR ET PROCÉDÉ DE REFROIDISSEMENT DE MATÉRIAU EN VRAC

(30) Priorität: 14.10.2019 BE 201905691; 14.10.2019 DE 102019215731
(43) Veröffentlichungstag der Anmeldung: 24.08.2022
(73) Patentinhaber: thyssenkrupp Industrial Solutions AG, 45143 Essen (DE); thyssenkrupp AG, 45143 Essen (DE)
(72) Erfinder: RICHTER, Stefanie, 59302 Oelde (DE); KÖNNING, Ludwig, 59227 Ahlen (DE); ALTFELD, Jochen, 48167 Münster (DE)
(74) Vertreter: thyssenkrupp Intellectual Property GmbH
(86) Internationale Anmeldenummer: PCT/EP2020/078560
(87) Internationale Veröffentlichungsnummer: WO 2021/074055

(56) Entgegenhaltungen:
- WO-A1-2011/035509
- US-A- 2 375 487

## Beschreibung

Die Erfindung betrifft ein Verfahren und einen Kühler zum Kühlen von Schüttgut, insbesondere Zementklinker.

Zur Kühlung von heißem Schüttgut, wie beispielsweise Zementklinker, ist es bekannt, dass das Schüttgut auf einen von einem Kühlmedium, wie beispielsweise Kühlgas durchströmbaren Belüftungsboden eines Kühlers aufgegeben wird. Das heiße Schüttgut wird anschließend zur Kühlung von einem Ende des Kühlers zum anderen Ende bewegt und dabei von Kühlgas durchströmt. Zur Kühlung eines Feinguts ist es bekannt, beispielsweise einen Wirbelbettkühler oder einen Fließbettkühler einzusetzen. Ein Feingutkühler ist beispielsweise aus der EP 0 576 053 A1 bekannt. Ein solcher Feingutkühler ist ausschließlich für Feingut geeignet. Gelangt zusätzlich zu dem Feingut noch Grobgut in den Feingutkühler, ist die Kühleffizienz des Feingutkühlers signifikant verringert, da der Abtransport des Grobguts erschwert ist und der Feingutkühler durch das Grobgut verstopfen kann. Eine Förderung des Grobguts zum Materialauslass des Feingutkühlers ist daher häufig nur manuell möglich. Insbesondere in einem Separationskühler, in dem Feingut und Grobgut getrennt voneinander gekühlt werden, ist es daher notwendig, dass die Trennung des Feinguts und des Grobguts vollständig erfolgt, sodass der Feingutkühler ausschließlich mit Feingut befüllt wird. Eine solche vollständige Trennung ist sehr aufwendig. WO 2011/035509 A1 und US 2 375 487 A beschreiben Kühler mit einer Trennung von Fein- und Grobgut.

Davon ausgehend ist es Aufgabe der vorliegenden Erfindung, einen Kühler und ein Verfahren zu Kühlen von Schüttgut, insbesondere einen Feingutkühler zur Kühlung von Feingut, bereitzustellen, der vorzugsweise für einen Einsatz in einem Separationskühler besonders gut geeignet ist.

Diese Aufgabe wird erfindungsgemäß durch ein Verfahren zum Kühlen von Schüttgut mit den Merkmalen des unabhängigen Verfahrensanspruchs 1, sowie durch einen Kühler mit den Merkmalen des unabhängigen Vorrichtungsanspruchs 6 gelöst. Vorteilhafte Weiterbildungen ergeben sich aus den abhängigen Ansprüchen.

Ein Verfahren zum Kühlen von Schüttgut, insbesondere Zementklinker, in einem Feingutkühler weist nach einem ersten Aspekt die Schritte auf:
- Einlassen von zu kühlendem Schüttgut mit einem Feingutanteil von 70% bis 95%, insbesondere 75% bis 85%, vorzugsweise 80%, und einem Grobgutanteil von 5% bis 30%, insbesondere 15% bis 25%, vorzugsweise 20% durch einen Materialeinlass (30) in den Feingutkühler (22), wobei das Feingut eine Korngrösse von etwa 10⁻⁵ mm bis 4mm und Grobgut von 4mm bis 100mm aufweist,
- Fördern des Grobguts mit einer ersten, mechanischen oder pneumatischen Fördereinheit und Fördern des Feinguts mit einer zweiten Fördereinheit in Fördervorrichtung (F) durch den Feingutkühler (22) zu einem Materialauslass (32).

Der Feingutkühler ist beispielsweise in einem Kühler zum Kühlen von Schüttgut angeordnet, wobei der Kühler ein Separationskühler ist, in dem Feingut und Grobgut im Wesentlichen getrennt voneinander gekühlt werden. Der Kühler weist vorzugsweise einen Kühlereinlass zum Einlassen von zu kühlendem Schüttgut in den Kühler, einen in Förderrichtung des Schüttguts hinter dem Kühlereinlass angeordneten Separationsbereich zum Separieren von Grobgut und Feingut, einen sich an den Separationsbereich anschließenden Grobgutkühler zum Kühlen des Grobguts und einen sich an den Separationsbereich anschließenden und parallel zum Grobgutkühler geschalteten Feingutkühler zum Kühlen des Feinguts auf. Dem Kühler ist insbesondere ein Ofen zum Brennen von Zementklinker vorgeschaltet, wobei der gebrannte Zementklinker aus dem Ofen durch den Materialeinlass in den Kühler fällt. Ein Verfahren zum Kühlen von Schüttgut in einem solchen Kühler umfasst die Schritte: Einlassen von zu kühlendem Schüttgut aus einem Ofen durch einen Materialeinlass in den Kühler, Separieren von Feingut und Grobgut in einem Separationsbereich des Kühlers, wobei das Grobgut eine Korngröße aufweist, die größer ist als die des Feinguts, Kühlen des Feinguts in einem Feingutkühler mit einem Kühlmedium und Kühlen des Grobguts in einem Grobgutkühler separat zu dem Feingut.

An den Materialeinlass schließt sich beispielsweise der Kühlereinlaufbereich an und weist beispielsweise einen statischen Rost auf, der unterhalb des Ofenauslaufs angeordnet ist, sodass das aus dem Ofen austretende Schüttgut schwerkraftbedingt auf den statischen Rost fällt. Bei dem statischen Rost handelt es sich beispielsweise um ein in einem Winkel zur Horizontalen von 10° bis 35°, vorzugsweise 12° bis 33°, insbesondere 13° bis 21° angestellten Rost, der von unten mit Kühlluft durchströmt wird.

In Strömungsrichtung des zu kühlenden Schüttguts schließt sich beispielsweise direkt an den Materialeinlass oder an den statischen Rost des Kühlereinlaufbereichs der Separationsbereich an, in dem das Feingut und das Grobgut des Schüttguts separiert werden und anschließend getrennt voneinander gekühlt werden. Der Separationsbereich weist beispielsweise einen statischen oder einen dynamischen Rost auf. Zusätzlich umfasst der Separationsbereich Mittel zum Separieren des Feinguts von dem Grobgut des Schüttguts.

Bei dem Feingut handelt es sich beispielsweise um Schüttgut mit einer Korngröße von etwa 10⁻⁵ mm bis 4mm, vorzugsweise 10⁻⁵ mm bis 2mm, wobei es sich bei dem Grobgut um Schüttgut mit einer Korngröße von 4mm bis 100mm, vorzugsweise 2mm bis 100mm handelt. Der Trennschnitt zwischen dem Grobgut und dem Feingut liegt vorzugsweise bei einer Korngröße von 2mm. Vorzugsweise umfasst das Feingut einen Anteil von 90% bis 95% an Schüttgut der Korngröße von 10⁻⁵ mm bis 4mm, vorzugsweise 10⁻⁵ mm bis 2mm, wobei es sich bei 5% bis 10% des Feinguts um Schüttgut mit einer Korngröße von mehr als 2mm, vorzugsweise mehr als 4mm handeln kann. Vorzugsweise umfasst das Grobgut einen Anteil von 90 bis 95% an Schüttgut der Korngröße von 2mm bis 100mm, vorzugsweise 4mm bis 100mm, wobei es sich bei 5% bis 10% des Grobguts um Schüttgut mit einer Korngröße von weniger als 2mm, vorzugsweise weniger als 4mm handeln kann.

An den Separationsbereich schließen sich vorzugsweise der Feingutkühler und der Grobgutkühler an, wobei diese parallel zueinander angeordnet sind. Die parallele Anordnung des Feingutkühlers und des Grobgutkühlers ist nicht geometrisch, sondern prozesstechnisch zu verstehen. Der Feingutkühler kann auch im geometrischen Sinn parallel zu dem Grobgutkühler angeordnet sein. Der Feingutkühler ist vorzugsweise in Förderrichtung des Schüttguts parallel zu dem Grobgutkühler geschaltet. Der Feingutkühler und der Grobgutkühler weisen vorzugsweise jeweils einen dynamischen Rost auf, die jeweils mit einem Kühlmedium zum Kühlen des auf dem dynamischen Rost aufliegenden Schüttguts durchströmt werden. Bei dem Kühlmedium handelt es sich beispielsweise um Kühlluft, die mittels Ventilatoren durch den Fein- und Grobgutkühler geblasen wird.

Das Einlassen von Schüttgut mit einem Feingutanteil von 70% bis 95%, insbesondere 75% bis 85%, vorzugsweise 80%, ermöglicht ein effizientes Betreiben eines Separationskühlers, so dass eine vollständige Trennung des Feinguts und des Grobguts nicht notwendig ist.

Zwischen dem Separationsbereich und dem Feingutkühler ist beispielsweise ein Separationsmittel angeordnet, wobei sich das Separationsmittel vollständig oder teilweise entlang einer Längsseite des Separationsbereichs erstreckt. Vorzugsweise ist das Separationsmittel als Wand ausgebildet.

Das Separationsmittel weist insbesondere einen Feingutauslass zum Auslassen des Feinguts aus dem Separationsbereich in den Feingutkühler auf, wobei der Feingutauslass vorzugsweise vollständig oberhalb des Belüftungsbodens des Separationsbereichs angeordnet ist. Der Feingutauslass des Separationsbereichs stellt vorzugsweise den Feinguteinlass in den Feingutkühler dar, wobei sich der Feingutkühler beispielsweise direkt oder über ein Transportmittel zum Transport des Feinguts an den Separationsbereich anschließt. Das Grobgut liegt vorzugsweise in dem unteren Bereich des Schüttguts des Separationsbereichs vor, wobei das Feingut in dem oberen Bereich auf dem Grobgut aufliegt. Der Separationsbereich weist daher einen oberen Feingutbereich und einen sich darunter direkt anschließenden Grobgutbereich auf, der sich an den Belüftungsboden des Separationsbereichs anschließt. Ein Feingutauslass zum Auslassen von Feingut von dem Separationsbereich in den Feingutkühler oberhalb des Belüftungsbodens des Separationsbereichs ermöglicht, dass vorzugsweise Feingut in den Feingutkühler gelangt. Vorzugsweise ist der Feingutauslass in dem Feingutbereich des Separationsbereichs angeordnet, in dem ausschließlich oder hauptsächlich Feingut vorhanden ist. Der Grobgutbereich, in dem hauptsächlich oder ausschließlich Grobgut vorhanden ist, ist vorzugsweise vollständig oder teilweise unterhalb des Feingutauslasses angeordnet, sodass dieses nicht schwerkraftbedingt durch den Feingutauslass in den Feingutkühler gelangen kann. Vorzugsweise wird durch eine solche Ausführung erreicht, dass weniger als 10% bis 30%, insbesondere 15% bis 25%, vorzugsweise 20%, des eintretenden Materials einer Partikelgröße größer 4mm, vorzugsweise größer als 2mm, in den Feingutkühler gelangt. Beispielsweise bildet das als Wand ausgebildete Separationsmittel eine Seitenwand des Separationsbereichs und beispielsweise gleichzeitig eine Seitenwand des Grobgutkühlers.

Gemäß einer ersten Ausführungsform wird das Feingut des Schüttguts pneumatisch gefördert. Insbesondere wird das Feingut mittels eines Kühlluftstroms, der beispielsweise über eine Mehrzahl von Ventilatoren erzeugt wird, fluidisiert, sodass es sich wie eine flüssige Masse verhält. Der Transport des Feinguts in Förderrichtung erfolgt vorzugsweise durch das kontinuierliche Einführen von Schüttgut in den Feingutkühler, sodass das fluidisierte Feingut in Förderrichtung bewegt wird.

Gemäß einer weiteren Ausführungsform weist das Schüttgut einen Grobgutanteil von 5% bis 30%, insbesondere 25% bis 15%, vorzugsweise 20% auf, wobei das Grobgut pneumatisch gefördert wird. Vorzugsweise wird das Grobgut mittels Druckluft gefördert, die von einer Drucklufteinrichtung, wie beispielsweise einem Kompressor, erzeugt wird. Insbesondere werden das Feingut und das Grobgut von unterschiedlichen pneumatischen Fördereinheiten gefördert, sodass die Fördergeschwindigkeit des Feinguts und des Grobgut beispielsweise unterschiedlich ist und getrennt voneinander einstellbar ist. Im Betrieb des Feingutkühlers setzt sich das Grobgut in dem unteren Bereich des Schüttguts ab, wobei der obere Bereich des Schüttguts von Feingut ausgebildet wird.

Die Druckluft wird gemäß einer weiteren Ausführungsform über in Förderrichtung weisende Drucklufteinlässe in den Feingutkühler geleitet, wobei das Grobgut mittels der Druckluft in Förderrichtung transportiert wird. Die Drucklufteinlässe sind beispielsweise als Kanäle in dem Belüftungsboden oder als Leitungen ausgebildet und erstrecken sich vorzugsweise ausschließlich in dem Bereich des Feingutkühlers, in dem das Grobgut angeordnet ist.

Gemäß einer weiteren Ausführungsform weist das Schüttgut einen Grobgutanteil von 5% bis 30%, insbesondere 25% bis 15%, vorzugsweise 20% auf, wobei das Grobgut mechanisch gefördert wird. Vorzugsweise wird der Feingutkühler derart betrieben, dass das Schüttgut in dem Feingutkühler eine Höhe von 100mm bis 400mm, insbesondere 200mm bis 300mm, vorzugsweise 250mm aufweist.

Gemäß einer weiteren Ausführungsform werden das Grobgut und das Feingut separat aus dem Feingutkühler ausgelassen. Beispielsweise wird das Grobgut durch einen Grobgutauslass und das Feingut durch einen dazu separaten Feingutauslass aus dem Feingutkühler ausgelassen. Der Grobgutauslass ist beispielsweise in Förderrichtung des Schüttguts vor dem Feingutauslass angeordnet. Es ist ebenfalls denkbar, dass der Feingutauslass in Förderrichtung vor dem Grobgutauslass angeordnet ist. Hierzu eignet sich beispielsweise ein Abströmen des Feinguts aus einer Öffnung in dem Belüftungsboden und/oder einer Öffnung in der Seitenwand des Feingutkühlers. Beispielsweise wird das über dem Grobgut liegende Feingut über einen Überlauf aus dem Feingutkühler abgeführt. Es ist auch denkbar, dass das Grobgut und das Feingut zusammen aus einem gemeinsamen Materialauslass aus dem Feingutkühler ausgelassen werden.

Gemäß einer weiteren Ausführungsform wird das Schüttgut in einem in Förderrichtung hinteren Bereich des Feingutkühlers ausschließlich mechanisch gefördert. Vorzugsweise wird das Feingut in einem in Förderrichtung hinteren Bereich des Feingutkühlers nicht pneumatisch gefördert. Beispielsweise erfolgt die pneumatische Förderung des Feinguts, insbesondere die Fluidisierung des Feinguts ausschließlich nicht in dem an den Materialauslass angrenzenden Bereich des Feingutkühlers. In dem hinteren Bereich des Feingutkühlers setzt sich das Feingut auf dem Grobgut ab, wodurch eine Separation des Feinguts mittels beispielsweise eines Überlaufs möglich ist. Vorzugsweise umfasst der an den Feingutauslass angrenzende Bereich des Belüftungsbodens einen Bereich ohne Kühlluftdurchlässe.

Die Erfindung umfasst auch einen Kühler zum Kühlen von Schüttgut, insbesondere Zementklinker, aufweisend einen Kühlereinlass zum Einlassen von zu kühlendem Schüttgut in den Kühler, einen in Förderrichtung des Schüttguts hinter dem Kühlereinlass angeordneten Separationsbereich zum Separieren von Grobgut und Feingut, einen sich an den Separationsbereich anschließenden Grobgutkühler zum Kühlen des Grobguts und einen sich an den Separationsbereich anschließenden und parallel zum Grobgutkühler geschalteten Feingutkühler zum Kühlen des Feinguts. Der Feingutkühler weist eine erste Fördereinheit zur Förderung von Grobgut und eine zweite Fördereinheit zur Förderung von Feingut auf. Eine getrennte Förderung des Feinguts und des Grobguts ermöglicht eine Kühlung von Grobgut und Feingut zusammen in einem Kühler, sodass eine vollständige Trennung von Feingut und Grobgut innerhalb des Separationsbereichs nicht notwendig ist. Des Weiteren wird ein Verstopfen des Feingutkühlers durch die aktive Förderung des Grobguts verhindert.

Die mit Bezug auf den Kühler zum Kühlen von Schüttgut erläuterten Ausgestaltungen und Vorteile treffen in verfahrensmäßiger Entsprechung auch auf das Verfahren zum Kühlen von Schüttgut zu.

Der Feingutkühler weist insbesondere einen Belüftungsboden auf, der beispielsweise als Rost ausgebildet ist und auf dem das Schüttgut aufliegt. Die erste Fördereinheit zur Förderung des Grobguts ist vorzugsweise derart angeordnet, dass lediglich das auf dem Belüftungsboden aufliegende Grobgut mittels der ersten Fördereinheit förderbar ist. Vorzugsweise ist die erste Fördereinheit derart angeordnet, dass sie lediglich den unteren Bereich des Schüttguts, in dem das Grobgut liegt, fördert. Die Grobgutschicht weist beispielsweise eine Höhe von 20mm bis 200mm, insbesondere 50mm bis 150mm, vorzugsweise 100mm auf.

Gemäß einer weiteren Ausführungsform ist die erste Fördereinheit für das Grobgut eine mechanische oder eine pneumatische Fördereinheit. Gemäß einer weiteren Ausführungsform ist die zweite Fördereinheit für das Feingut eine pneumatische Fördereinheit. Die mechanische Fördereinheit umfasst vorzugsweise einen Belüftungsboden, beispielsweise einen Rost. Die mechanische Fördereinheit weist gemäß einer weiteren Ausführungsform eine Mehrzahl von Förderelementen auf, die gleichzeitig in Förderrichtung und ungleichzeitig entgegen der Förderrichtung bewegbar sind. Die Förderelemente sind beispielsweise Planken, vorzugsweise Rostplanken, die nebeneinander angeordnet einen Belüftungsboden ausbilden. Die Förderelemente sind in Förderrichtung F und entgegen der Förderrichtung F bewegbar. Die als Förderplanken oder Rostplanken ausgebildeten Förderelemente sind vorzugsweise von Kühlluft durchströmbar, über die gesamte Länge des Feingutkühlers angeordnet und bilden die Oberfläche aus, auf der das Schüttgut aufliegt. Es ist ebenfalls denkbar, dass die mechanische Fördereinheit beispielsweise einen stationären von Kühlluft durchströmbaren Belüftungsboden und eine Mehrzahl von relativ zu dem Belüftungsboden bewegbaren Förderelementen umfasst. Die Förderelemente sind vorzugsweise oberhalb des Belüftungsbodens angeordnet und weisen quer zur Förderrichtung verlaufende Mitnehmer auf. Zum Transport des Schüttguts entlang des Belüftungsbodens sind die Förderelemente in Förderrichtung und entgegen der Förderrichtung bewegbar. Die Förderelemente sind vorzugsweise nach dem "walking-floor-Prinzip" bewegbar, wobei die Förderelemente alle gleichzeitig in Förderrichtung und ungleichzeitig entgegen der Förderrichtung bewegt werden. Vorzugsweise erstrecken sich die Förderelemente der mechanischen Fördereinheit ausschließlich in den Bereich des Schüttguts, in dem das Grobgut vorhanden ist.

Bei der mechanischen Fördereinheit handelt es sich beispielsweise um eine Förderschnecke oder andere Fördereinheiten der Schüttguttechnik. Die Förderschnecke erstreckt sich vorzugsweise in Förderrichtung oberhalb des Belüftungsbodens.

Die pneumatische Fördereinheit zur Förderung des Feinguts weist gemäß einer weiteren Ausführungsform eine Mehrzahl von Ventilatoren zum Beaufschlagen des Feinguts mit einem Kühlluftstrom auf. Die Ventilatoren sind vorzugsweise unterhalb des Belüftungsbodens angeordnet, sodass der Kühlluftstrom durch den Belüftungsboden in das darauf liegende Schüttgut strömt. Insbesondere sind die Ventilatoren derart ausgebildet und eingerichtet, dass sie das Feingut fluidisieren, sodass es vorzugsweise durch das in den Feingutkühler eingelassene Schüttgut in Förderrichtung transportiert wird. Zusätzlich ist die erste Fördereinheit des Feingutkühlers beispielsweise als mechanische Fördereinheit ausgebildet.

Gemäß einer weiteren Ausführungsform weist die pneumatische Fördereinheit zur Förderung des Grobguts in Förderrichtung eine Drucklufteinrichtung zum Beaufschlagen des Grobguts mit Druckluft auf. Die Drucklufteinrichtung umfasst vorzugsweise einen Kompressor zur Erzeugung der Druckluft und eine Mehrzahl von Drucklufteinlässe, die beispielsweise als in Förderrichtung weisende Kanäle ausgebildet sind. Vorzugsweise erstrecken sich die Drucklufteinlässe durch den Belüftungsboden oder sind oberhalb des Belüftungsbodens angeordnet. Die in Förderrichtung weisenden Kanäle sorgen für einen zuverlässigen Transport den Grobguts entlang des Belüftungsbodens in Förderrichtung.

Gemäß einer weiteren Ausführungsform sind in dem Feingutkühler eine Mehrzahl von Leitelementen zum Leiten des Feinguts innerhalb des Feingutkühlers angeordnet. Die Leitelemente erstrecke sich vorzugsweise in den Bereich des Schüttguts hinein, der hauptsächlich Feingut aufweist. Beispielsweise sind die Leitelemente zu dem Belüftungsboden beabstandet angeordnet, sodass das Grobgut unterhalb der Leitelemente angeordnet ist. Beispielsweise weisen die Leitelemente einen Abstand von 20mm bis 200mm, insbesondere 50mm bis 150mm, vorzugsweise 100mm zu dem Belüftungsboden auf. Vorzugsweise sind eine Mehrzahl von parallelen Leitelementen gleichmäßig zueinander beabstandet über die gesamte Länge des Feingutkühlers angeordnet. Alternativ können die Leitelemente auch partiell auf dem Belüftungsboden befestigt sein und in das Schüttgut, bestehend aus Grobgutmaterial und Feingutmaterial, hineinragen. Hierdurch entstehen Umlenkungen bei der Förderung des Schüttguts durch den Feingutkühler, wodurch eine lokale Durchmischung des Schüttgutstroms erfolgt. Die Leitelemente erstrecken sich beispielsweise orthogonal zur Förderrichtung.

Gemäß einer weiteren Ausführungsform weist der Feingutkühler einen Grobgutauslass zum Auslassen von Grobgut aus dem Feingutkühler und einen Feingutauslass zum Auslassen von Feingut aus dem Feingutkühler auf. Der Grobgutauslass und der Feingutauslass sind separat zueinander angeordnet. Vorzugsweise ist der Grobgutauslass als Senke in dem Belüftungsboden oder in Förderrichtung hinter dem Belüftungsboden angeordnet. Insbesondere ist der Feingutauslass in Förderrichtung hinter dem Grobgutauslass angeordnet.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines Kühlers zum Kühlen von Schüttgut in einer Draufsicht gemäß einem Ausführungsbeispiel.
Fig. 2 zeigt eine schematische Darstellung eines Kühlers zum Kühlen von Schüttgut in einer Schnittansicht gemäß einem Ausführungsbeispiel.
Fig. 3 zeigt eine schematische Darstellung eines Kühlers zum Kühlen von Schüttgut in einer Schnittansicht gemäß einem Ausführungsbeispiel.
Fig. 4 zeigt eine schematische Darstellung eines Kühlers zum Kühlen von Schüttgut in einer Schnittansicht gemäß einem Ausführungsbeispiel.

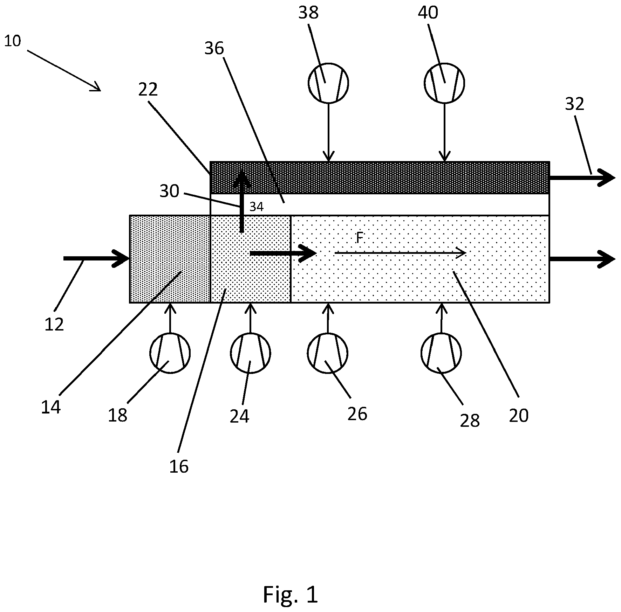

Fig. 1 zeigt einen Kühler 10 zum Kühlen von heißem Schüttgut, insbesondere Zementklinker. Der Kühler 10 ist vorzugsweise stromabwärts eines in Fig. 1 nicht dargestellten Ofens, insbesondere Drehrohrofens, zum Brennen von Zementklinker angeordnet, sodass aus dem Ofen austretendes heißes Schüttgut beispielsweise schwerkraftbedingt auf den Kühler 10 fällt.

Der Kühler 10 weist eine Mehrzahl von Bereichen auf, in denen jeweils das Schüttgut unterschiedliche Temperaturen aufweist und beispielsweise auf unterschiedliche Weise gekühlt wird. Der Kühler 10 weist einen Materialeinlass 12 zum Einlassen von heißem Schüttgut in den Kühler 10 auf. Bei dem Materialeinlass 12 handelt es sich beispielsweise um den Bereich zwischen dem Ofenauslass und einem statischen Rost des Kühlers 10, wobei das Schüttgut vorzugsweise schwerkraftbedingt durch den Materialeinlass 12 fällt. Das zu kühlende Schüttgut weist in dem Materialeinlass 12 beispielsweise eine Temperatur von 1200 bis 1450°C auf. An den Materialeinlass 12 schließt sich ein Kühlereinlaufbereich 14 an, der beispielsweise einen statischen Rost umfasst. Bei dem statischen Rost handelt es sich beispielsweise um ein in einem Winkel zur Horizontalen von 10° bis 35°, vorzugsweise 12° bis 30°, insbesondere 13° bis 21° angestellten Rost, der von unten mit Kühlluft durchströmt wird. Vorzugsweise ist der statische Rost unterhalb des Ofenauslaufs angeordnet, sodass das Schüttgut aus dem Ofenauslauf direkt auf den statischen Rost fällt und auf diesem in Förderrichtung entlang gleitet. In dem Kühlereinlaufbereich 14 des Kühlers 10 wird das Schüttgut insbesondere auf eine Temperatur von weniger als 1150°C abgekühlt. Der statische Rost weist vorzugsweise Durchlässe auf, durch welche Kühlluft in den Kühler 10 und das Schüttgut eintritt. Die Kühlluft wird beispielsweise durch wenigstens einen unterhalb des statischen Rosts angeordneten Ventilator 18 erzeugt, sodass Kühlluft von unten durch den statischen Rost strömt. Innerhalb des Kühlers 10 wird das zu kühlende Schüttgut in Förderrichtung F bewegt. Optional schließt sich der Separationsbereich 16 an den Kühlereinlaufbereich 14 oder direkt an den Kühlereinlass 12 an, wobei der Kühlereinlaufbereich 14 optional nicht vorhanden ist oder beispielsweise mit dem Separationsbereich 16 zusammenfällt. Der Separationsbereich 16 des Kühlers 10 ist optional insbesondere derart angeordnet, dass das Schüttgut aus dem Ofenauslauf direkt auf den statischen Rost oder des dynamischen Rosts des Separationsbereichs 16 fällt. In dem Ausführungsbeispiel der Fig. 1 schließt sich an den Kühlereinlaufbereich 14 in Strömungsrichtung des Schüttguts ein Separationsbereich 16 des Kühlers 10 an.

In dem Separationsbereich 16 wird das Schüttgut in Feingut und Grobgut separiert. In dem Separationsbereich 16 wird das Schüttgut vorzugweise auf eine Temperatur von weniger als 1150°C, vorzugsweise 1100°C, insbesondere 800°C abgekühlt, wobei die Abkühlung derart erfolgt, dass ein vollständiges Erstarren von in dem Schüttgut vorhandenen flüssigen Klinkerphasen in feste Phasen erfolgt. Beim Verlassen des Separationsbereichs 16 des Kühlers 10 liegt das Schüttgut vorzugsweise vollständig in der festen Phase und einer Temperatur von maximal 1100°C vor. Bei der Separation des Schüttguts in Grobgut und Feingut liegt zumindest das Feingut vorzugsweise zumindest teilweise oder vollständig in der festen Phase vor und weist eine Temperatur von weniger als 1150°C, insbesondere weniger als 1100°C, auf. Bei einer solchen Temperatur kommt es nicht zum Verkleben oder Verklumpen des Schüttguts. Die Feingutpartikel und die Grobgutpartikel liegen im Wesentlichen getrennt voneinander vorzugsweise in unterschiedlichen Schichten vor, sodass eine Trennung des Feinguts und des Grobguts optimal durchgeführt werden kann, ohne dass es zu Anbackungen oder Verklumpungen des Schüttguts kommt. Der Separationsbereich 16 des Kühlers 10 weist beispielhaft einen oder eine Mehrzahl von Ventilatoren 24 auf, mittels welcher Kühlluft durch das zu kühlende Schüttgut strömt. Vorzugsweise weist das Schüttgut in dem Separationsbereich einen oberen Bereich, in dem größtenteils oder ausschließlich Feingut vorhanden ist, und einen unteren Bereich auf, in dem größtenteils Grobgut vorhanden ist. Unter Feingut ist Schüttgut mit einer Korngröße von etwa 10⁻⁵ mm bis 4mm, vorzugsweise 10⁻⁵ mm bis 2mm zu verstehen, wobei es sich bei dem Grobgut um Schüttgut mit einer Korngröße von 4mm bis 100mm, vorzugsweise 2mm bis 100mm handelt. Der Trennschnitt zwischen dem Grobgut und dem Feingut liegt vorzugsweise bei einer Korngröße von 2mm.

An den Separationsbereich 16 schließen sich ein Grobgutkühler 20 zum Kühlen des in dem Separationsbereich 16 von dem Feingut separierten Grobguts und ein Feingutkühler 22 zum Kühlen des in dem Separationsbereich von dem Grobgut separierten Feinguts an, wobei der Feingutkühler 22 und der Grobgutkühler 20 parallel zueinander angeordnet sind. Vorzugsweise wird von dem Separationsbereich größtenteils oder ausschließlich Feingut in den Feingutkühler 22 geleitet, wobei größtenteils oder ausschließlich Grobgut in den Grobgutkühler 20 geleitet wird.

Der Feingutkühler 22 und/oder der Grobgutkühler 20 umfasst beispielsweise einen dynamischen Rost, der eine mechanische Fördereinheit mit einer Mehrzahl von in Förderrichtung F und entgegen der Förderrichtung F bewegbaren Förderelementen zum Transport des Schüttguts in Förderrichtung aufweist. Bei der Fördereinheit handelt es sich beispielsweise um einen Schubbodenförderer, der eine Mehrzahl von Förderelementen zum Transport des Grobguts aufweist. Bei den Förderelementen handelt es sich bei einem Schubbodenförderer beispielsweise um eine Mehrzahl von Planken, vorzugsweise Rostplanken, die einen Belüftungsboden ausbilden. Die Förderelemente sind nebeneinander angeordnet und in Förderrichtung F und entgegen der Förderrichtung F bewegbar. Die als Förderplanken oder Rostplanken ausgebildeten Förderelemente sind vorzugsweise von Kühlluft durchströmbar, über die gesamte Länge des Grobkühlers 20 angeordnet und bilden die Oberfläche aus, auf der das Schüttgut aufliegt.

Die mechanische Fördereinheit kann auch ein Schubförderer sein, wobei die mechanische Fördereinheit einen stationären von Kühlluft durchströmbaren Belüftungsboden und eine Mehrzahl von relativ zu dem Belüftungsboden bewegbaren Förderelementen aufweist. Die Förderelemente des Schubförderers sind vorzugsweise oberhalb des Belüftungsbodens angeordnet und weisen quer zur Förderrichtung verlaufende Mitnehmer auf. Zum Transport des Schüttguts entlang des Belüftungsbodens sind die Förderelemente in Förderrichtung F und entgegen der Förderrichtung F bewegbar. Die Förderelemente des Schubförderers und des Schubbodenförderers sind nach dem "walking-floor-Prinzip" bewegbar, wobei die Förderelemente alle gleichzeitig in Förderrichtung und ungleichzeitig entgegen der Förderrichtung bewegt werden. Alternativ dazu sind auch andere Förderprinzipien aus der Schüttguttechnik denkbar.

Im Anschluss an den Grobgutkühler 20 wird das gekühlte Grobgut aus dem Kühler 10 ausgelassen und weist dabei vorzugsweise eine Temperatur von 50°C bis 200°C, vorzugsweise weniger als 100°C auf. Der Grobgutkühler 20 weist beispielhaft unterhalb des Belüftungsbodens eine Mehrzahl on Ventilatoren 26, 28 auf, mittels welcher Kühlluft von unten durch den Belüftungsboden strömt.

Der Separationsbereich 16 umfasst beispielweise einen voran beschriebenen dynamischen Rost, der eine mechanische Fördereinheit mit einer Mehrzahl von in Förderrichtung und entgegen der Förderrichtung F bewegbaren Förderelementen zum Transport des Schüttguts in Förderrichtung aufweist. Es ist auch denkbar, dass der dynamische Rost des Separationsbereichs 16 auch den dynamischen Rost des Grobgutkühlers 20 ausbildet und sich über die gesamte Länge des Separationsbereichs 16 und des Grobgutkühlers 20 erstreckt.

Der Feingutkühler 22 weist einen Materialeinlass 30 zum Einlassen von Feingut aus dem Separationsbereich 16 des Kühlers 10 in den Feingutkühler 22. Der Feingutkühler 22 weist auch einen Materialauslass 32 in einem dem Materialeinlass 30 beispielsweise gegenüberliegenden Bereich des Feingutkühlers 22 auf zum Auslassen von Feingut aus dem Feingutkühler 22.

Der Separationsbereich 16 weist einen Feingutauslass 34 auf zum Auslassen des Feinguts aus dem Separationsbereich 16 in den Feingutkühler 22. Der Feingutauslass 34 und der Materialeinlass 30 fallen beispielsweise zusammen. Der Separationsbereich 16 und der Feingutkühler 22 sind beispielsweise über Materialrutschen miteinander verbunden. Beispielsweise weist der Feingutkühler 22 einen voran beschriebenen dynamischen Rost auf, der eine Fördereinheit mit einer Mehrzahl von in Förderrichtung und entgegen der Förderrichtung F bewegbaren Förderelementen zum Transport des Schüttguts in Förderrichtung aufweist.

Der Kühler 10 weist beispielsweise ein Separationsmittel 36 auf, das in dem Separationsbereich 16 des Kühlers 10 angeordnet ist und den Feingutkühler 22 von dem Separationsbereich 16 und dem Grobgutkühler 20 trennt. Das Separationsmittel 36 ist beispielhaft eine Wand, die sich vollständig mindestens entlang einer Längsseite des Separationsbereichs 16 in Förderrichtung F des Schüttguts erstreckt. Beispielhaft erstreckt sich das Separationsmittel 36 zusätzlich vollständig oder zumindest teilweise in Förderrichtung F entlang einer Längsseite des Grobgutkühlers 20.

In dem Separationsbereich 16 liegt das Schüttgut vorzugsweise bereits in zwei Phasen vor, wobei das Feingut oberhalb des Grobguts angeordnet ist. Das Grobgut liegt vorzugsweise auf dem dynamischen Rost des Separationsbereichs 16 auf, wobei das Feingut auf dem Grobgut aufliegt. Das Separationsmittel 36 ist beispielsweise plattenförmig und erstreckt sich von dem dynamischen Rost des Separationsbereichs 16 in vertikaler Richtung. Die Oberkante des als Wand ausgebildeten Separationsmittels 36 dient als Auslass des Feinguts des Separationsbereichs 16 in den Feingutkühler 22. Das den oberen Bereich des Schüttgutbetts bildende Feingut strömt über das als Wand ausgebildete Separationsmittel 36 in den Feingutkühler 22. Der Feingutauslass 34 ist vollständig oberhalb des dynamischen Rosts angebracht. Optimalerweise gelangt hauptsächlich Feingut in den Feingutkühler, wobei ein geringer Anteil von Grobgut in dem Feingutkühler ebenfalls erwünscht ist. Vorzugsweise weist das Separationsmittel 36 eine Höhe auf, die geringer ist als die Höhe des Schüttgutbetts des Separationsbereichs 16. Der Feingutauslass 34 wird durch die Oberkante des als Wand ausgebildeten Separationsmittels 36 gebildet und ist insbesondere auf einer Höhe unterhalb der Höhe des Schüttgutbetts im Separationsbereich 16 angeordnet und erstreckt sich nicht, insbesondere an keiner Stelle des Separationsbereichs 16, über die Höhe des Schüttgutbetts hinaus. Vorzugsweise erstreckt sich die Wand über die Höhe des Grobgutanteils des Schüttgutbetts hervor, wobei der Feingutauslass 34 oberhalb der Höhe des Grobgutanteils des Schüttgutbetts angeordnet ist.

Das Separationsmittel 36, vorzugsweise die Wand, erstreckt sich beispielhaft entlang der gesamten Länge des Feingutkühlers 22 in Förderrichtung F an dem Feingutkühler 22. Vorzugsweise erstreckt sich das Separationsmittel 36 über die gesamte Längsseite des Feingutkühlers 22 und trennt den Feingutkühler 22 von dem Separationsbereich 16 und dem Grobgutkühler 20. Der Feingutauslass 34 erstreckt sich beispielsweise ausschließlich in dem Separationsbereich 16, vorzugsweise entlang der Länge des Separationsbereichs 16. Der Feingutkühler 22 ist beispielhaft parallel zu dem Grobgutkühler 20 angeordnet und erstreckt sich beispielhaft über die gesamte Länge des Grobgutkühlers 20 parallel zu diesem. Der Feingutkühler 22, der Separationsbereich 16 und der Grobgutkühler 20 weisen beispielsweise jeweils einen dynamischen Rost mit einer Fördereinrichtung auf. Beispielsweise ist eine nach dem "walking-floor-Prinzip" arbeitende Fördereinrichtung eines dynamischen Rosts vorgesehen, die den Feingutkühler 22, den Separationsbereich 16 und den Grobgutkühler 20 umfasst, wobei der Feingutkühler 22 von dem Separationsbereich 16 und dem Grobgutkühler 20 durch das Separationsmittel 36, insbesondere die Wand, getrennt ist.

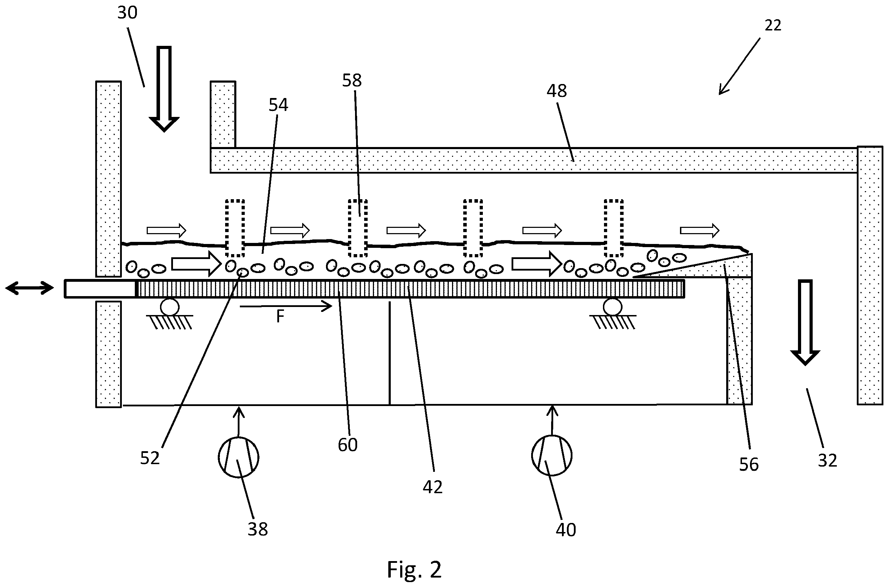

Fig. 2 zeigt ein Ausführungsbeispiel eines Feingutkühlers 22 mit einer mechanischen Fördereinheit 42. Beispielhaft ist eine Förderplanke in Fig. 2 dargestellt, die in Förderrichtung F und entgegen der Förderrichtung F bewegbar ist. Die mechanische Fördereinheit 42 weist Kühllufteinlässe 60 auf, durch welche Kühlluft von unten in das auf der mechanischen Fördereinheit 42 aufliegende Schüttgut gelangt. Das Schüttgut in dem Feingutkühler 22 weist Grobgut 52 auf, das sich auf der mechanischen Fördereinheit 42, insbesondere auf den Förderplanken, absetzt und den unteren Bereich des Schüttguts bildet. Das Schüttgut in dem Feingutkühler 22 weist Feingut 54 auf, das sich auf dem Grobgut 52 absetzt und den oberen Bereich des Schüttguts ausbildet. Das Feingut 54 wird durch die in den Feingutkühler 22 einströmende Kühlluft angehoben, vorzugsweise fluidisiert, und in Förderrichtung bewegt. Das Feingut 54 verhält sich beispielsweise wie eine flüssige Masse und fließt in Förderrichtung F oberhalb des Grobguts 52.

Optional weist der Feingutkühler 22 die mit unterbrochenen Linien dargestellten Leitelemente 58 zum Leiten des Feinguts 54 innerhalb des Feingutkühlers 22 auf. Bei den Leitelementen 58 handelt es sich beispielsweise um Platten aus Metall oder einem hitzebeständigen Werkstoff. Die Leitelemente 58 sind beispielhaft in Förderrichtung F gleichmäßig zueinander beabstandet angeordnet und erstrecken sich vorzugsweise jeweils zumindest über einen Teil oder die gesamte Breite des Inneren des Feingutkühlers. Die Leitelemente 58 sind beispielsweise parallel zueinander angeordnet. Vorzugsweise erstrecken sich die Leitelemente in das Schüttgut hinein, insbesondere in den oberen Bereich des Schüttguts, der hauptsächlich aus Feingut 58 besteht. Die Leitelemente 54 sind vorzugsweise nicht mit der mechanischen Fördereinheit 42 verbunden und zu dieser beabstandet angebracht. Der Abstand zwischen den Leitelementen 58 und der mechanischen Fördereinheit 42 entspricht in etwa der Höhe der Grobgutschicht innerhalb des Schüttguts, sodass die Leitelemente 58 den Strom des Grobguts 52 in Förderrichtung F nicht beeinflussen. Alternativ können die Leitelemente 58 auch partiell auf der Fördereinheit 42 aufstehen und erstrecken sich in vertikaler Richtung. Dadurch wird der Materialstrom im Feingutkühler 22 partiell umgelenkt und dabei lokal vermischt.

An dem Materialauslassseitigen Ende des Feingutkühlers 22 ist ein schräger Boden 56 angeordnet, der beispielhaft eine Keilform aufweist und in den Materialauslass 32 mündet. Der Boden 56 kann auch flach ausgestaltet sein, oder alternativ auch schräg ansteigend. Das Grobgut 52 und das Feingut 54 werden vorzugsweise gemeinsam durch den Materialauslass 32 aus dem Feingutkühler 22 ausgelassen. Der Feingutkühler 22 weist des Weiteren ein Gehäuse 48 auf, das sich beispielhaft zusätzlich über den in Fig. 2 nicht dargestellten gesamten Kühler 10 mit dem Grobgutkühler 20, dem Separationsbereich 16 und dem Kühlereinlass 14 erstreckt.

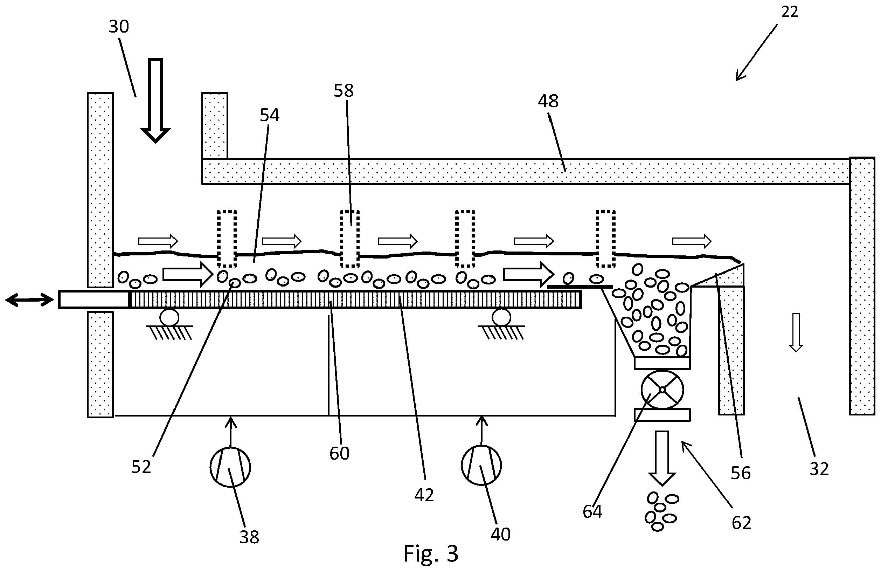

Fig. 3 zeigt ein weiteres Ausführungsbeispiel eines Feingutkühlers 22, wobei gleiche Elemente mit gleichen Bezugszeichen versehen sind. Im Unterschied zu Fig. 2 weist der Feingutkühler 22 der Fig. 3 einen Grobgutauslass 62 auf zum Auslassen des Grobguts 52 aus dem Feingutkühler 22. Der Grobgutauslass 62 ist beispielhaft als Senke ausgebildet, sodass das schwerere Grobgut sich im Betrieb des Feingutkühlers 22 darin absetzt. Beispielhaft ist der Grobgutauslass 62 in Förderrichtung F vor dem Materialauslass 32 angeordnet. An den Grobgutauslass schließt sich beispielsweise eine Materialschleuse, wie beispielsweise eine Zellradschleuse 64 zum Dosieren des den Feingutkühler 22 verlassenden Grobguts 52 an. Der Materialauslass 32 bildet in dem Ausführungsbeispiel der Fig. 3 einen Feingutauslass zum Auslassen des Feinguts 54 aus dem Feingutkühler 22. Der Boden 56 am Feingutauslass kann flach oder ansteigend ausgeführt sein.

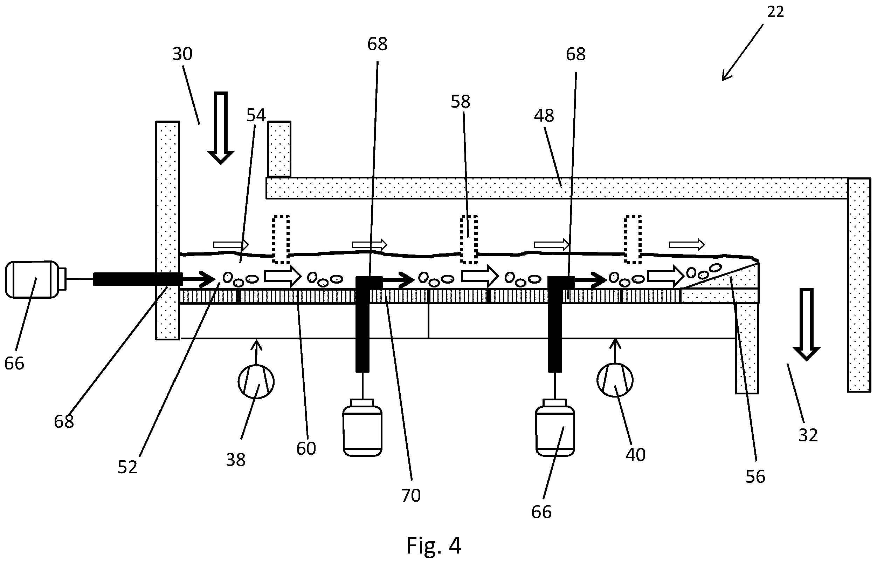

Fig. 4 zeigt ein weiteres Ausführungsbeispiel eines Feingutkühlers 22, wobei gleiche Elemente mit gleichen Bezugszeichen versehen sind. Der in Fig. 4 dargestellte Feingutkühler 22 weist beispielhaft keine mechanische Fördereinheit 42, sondern eine pneumatische Fördereinheit 70 zur Förderung des Grobguts 52 auf. Die pneumatische Fördereinheit 70 umfasst eine Mehrzahl von Drucklufteinrichtungen 66 und eine Mehrzahl von Drucklufteinlässen68. Vorzugsweise weist der Feingutkühler 22 einen Belüftungsboden, insbesondere einen Rost, auf, auf dem das Schüttgut aufliegt. Die Drucklufteinrichtung 66 ist beispielsweise ein Kompressor zur Erzeugung von Druckluft, wobei jede Drucklufteinrichtung 66 mit zumindest einem Drucklufteinlass 68 in Verbindung steht, sodass Druckluft mittels der Drucklufteinrichtungen 66 in das Schüttgut geleitet wird. Die Drucklufteinlässe 68 sind vorzugsweise in einem Belüftungsboden, auf dem das Schüttgut innerhalb des Feingutkühlers 22 aufliegt, ausgebildet. Beispielhaft ist ein Drucklufteinlass 68 in dem Gehäuse 48 ausgebildet. Die Drucklufteinlässe 68 sind vorzugsweise als Kanäle zum Leiten der Druckluft ausgebildet und weisen insbesondere in Förderrichtung F, sodass das Schüttgut mit einer in Förderrichtung F weisenden Kraft durch die Druckluft beaufschlagt wird. Insbesondere sind die Drucklufteinlässe 68 in dem Bereich des Feingutkühlers 22 angeordnet, in dem im Betrieb des Feingutkühlers 22 hauptsächlich oder ausschließlich Grobgut vorhanden ist. Die Drucklufteinrichtungen 66 dienen dem Transport des Grobguts 52, das sich im unteren Bereich des Schüttguts, vorzugsweise auf dem Belüftungsboden absetzt.

### Bezugszeichenliste

- 10: Kühler
- 12: Materialeinlass
- 14: Kühlereinlaufbereich
- 16: Separationsbereich
- 18: Ventilator
- 20: Grobgutkühler
- 22: Feingutkühler
- 24: Ventilator
- 26: Ventilator
- 28: Ventilator
- 30: Materialeinlass
- 32: Materialauslass
- 34: Feingutauslass
- 36: Separationsmittel
- 38: Ventilator
- 40: Ventilator
- 42: mechanische Fördereinheit
- 48: Gehäuse
- 52: Grobgut
- 54: Feingut
- 56: Feingutkühlerauslauf
- 58: Leitelemente
- 60: Kühllufteinlässe
- 62: Grobgutauslass
- 64: Zellradschleuse
- 66: Drucklufteinrichtung

## Patentansprüche

1. Verfahren zum Kühlen von Schüttgut, insbesondere Zementklinker, in einem Feingutkühler (2210) aufweisend die Schritte:
- Einlassen von zu kühlendem Schüttgut mit einem Feingutanteil von 70% bis 95%, insbesondere 75% bis 85%, vorzugsweise 80% und einem Grobgutanteil von 5% bis 30%, insbesondere 25% bis 15%, vorzugsweise 20% durch einen Materialeinlass (30) in den Feingutkühler (22), wobei das Feingut eine Korngröße von etwa 10⁻⁵ mm bis 4mm und Grobgut eine Korngröße von 4mm bis 100mm aufweist,
- Fördern des Grobguts mit einer ersten, mechanischen oder pneumatischen Fördereinheit und Fördern des Feinguts mit einer zweiten Fördereinheit in Förderrichtung (F) durch den Feingutkühler (22) zu einem Materialauslass (32).

2. Verfahren nach Anspruch 1, wobei das Feingut des Schüttguts pneumatisch gefördert wird.

3. Verfahren nach Anspruch 1 oder 2, wobei Druckluft über in Förderrichtung (F) weisende Drucklufteinlässe (66) in den Feingutkühler (22) geleitet wird und das Grobgut mittels der Druckluft in Förderrichtung (F) transportiert wird.

4. Verfahren nach einem der vorangehenden Ansprüche, wobei das Grobgut (52) und das Feingut (54) separat aus dem Feingutkühler (22) ausgelassen werden.

5. Verfahren nach einem der vorangehenden Ansprüche, wobei das Schüttgut in einem in Förderrichtung (F) hinteren Bereich des Feingutkühlers (22) ausschließlich mechanisch gefördert wird.

6. Feingutkühler (22) zum Kühlen von Schüttgut, insbesondere Zementklinker, mit einem Feingutanteil von 70% bis 95%, insbesondere 75% bis 85%, vorzugsweise 80%, und einem Grobgutanteil von 5% bis 30%, insbesondere 15% bis 25%, vorzugsweise 20%,
wobei das Feingut eine Korngröße von etwa 10⁻⁵ mm bis 4mm aufweist, aufweisend einen Materialeinlass (30) zum Einlassen von zu kühlendem Schüttgut in den Feingutkühler (22) und
einen Materialauslass (32) zum Auslassen von Schüttgut aus dem Feingutkühler,
**dadurch gekennzeichnet, dass**
der Feingutkühler (22) eine erste, mechanische oder pneumatische Fördereinheit zur Förderung von Grobgut und eine zweite Fördereinheit zur Förderung von Feingut aufweist und wobei die Fördereinheiten zur Förderung des Schüttguts in Förderrichtung (F) durch den Feingutkühler (22) hin zu dem Materialauslass (32) ausgebildet sind.

7. Feingutkühler (22) nach Anspruch 6, wobei die zweite Fördereinheit eine pneumatische Fördereinheit ist.

8. Feingutkühler (22) nach Anspruch 6 oder 7, wobei die mechanische Fördereinheit (42) eine Mehrzahl von Förderelementen aufweist, die gleichzeitig in Förderrichtung (F) und ungleichzeitig entgegen der Förderrichtung (F) bewegbar sind.

9. Feingutkühler (22) nach einem der Ansprüche 6 bis 8, wobei die pneumatische Fördereinheit zur Förderung des Feinguts (54) eine Mehrzahl von Ventilatoren (38, 40) zum Beaufschlagen des Feinguts mit einem Kühlluftstrom aufweist.

10. Feingutkühler (22) nach Anspruch 6, wobei die pneumatische Fördereinheit zur Förderung des Grobguts in Förderrichtung (F) eine Drucklufteinrichtung (66) zum Beaufschlagen des Grobguts (52) mit Druckluft aufweist.

11. Feingutkühler (22) nach einem der Ansprüche 6 bis 10, wobei in dem Feingutkühler (22) eine Mehrzahl von Leitelementen (58) zum Leiten des Feinguts (54) innerhalb des Feingutkühlers (22) angeordnet sind.

12. Feingutkühler (22) nach einem der Ansprüche 6 bis 11, wobei der Feingutkühler (22) einen Grobgutauslass (62) zum Auslassen von Grobgut (52) aus dem Feingutkühler (22) und einen Feingutauslass (32) zum Auslassen von Feingut (54) aus dem Feingutkühler (22) aufweist.

13. Kühler (10) zum Kühlen von Schüttgut aufweisend
einen Kühlereinlass (12) zum Einlassen von zu kühlendem Schüttgut in den Kühler (10) einen in Förderrichtung (F) des Schüttguts hinter dem Kühlereinlass (12) angeordneten Separationsbereich (16) zum Separieren von Grobgut und Feingut, einen sich an den Separationsbereich (16) anschließenden Grobgutkühler (20) zum Kühlen des Grobguts, wobei das Grobgut eine Korngröße von 4mm bis 100mm, aufweist und
einen sich an den Separationsbereich (16) anschließenden und parallel zum Grobgutkühler (20) geschalteten Feingutkühler (22) nach einem der Ansprüche 6 bis 12 zum Kühlen des Feinguts, wobei das Feingut eine Korngröße von etwa 10⁻⁵ mm bis 4mm aufweist.

## Claims

1. A method for cooling bulk material, in particular cement clinker, in a fine material cooler (2210), comprising the following steps:
- admitting bulk material to be cooled, which bulk material has a fine material proportion of 70% to 95%, in particular 75% to 85%, preferably 80%, and a coarse material proportion of 5% to 30%, in particular 25% to 15%, preferably 20%, into the fine material cooler (22) through a material inlet (30), wherein the fine material has a grain size of for instance 10⁻⁵ mm to 4 mm and the coarse material has a grain size of 4 mm to 100 mm,
- conveying the coarse material by means of a first, mechanical or pneumatic conveying unit, and conveying the fine material by means of a second conveying unit in a conveying direction (F) through the fine material cooler (22) to a material outlet (32).

2. The method as claimed in claim 1, wherein the fine material of the bulk material is conveyed pneumatically.

3. The method as claimed in claim 1 or 2, wherein compressed air is conducted into the fine material cooler (22) by way of compressed-air inlets (66) pointing in the conveying direction (F), and the coarse material is transported in the conveying direction (F) by means of the compressed air.

4. The method as claimed in one of the preceding claims, wherein the coarse material (52) and the fine material (54) are discharged from the fine material cooler (22) separately.

5. The method as claimed in one of the preceding claims, wherein the bulk material in a region of the fine material cooler (22) that is downstream in the conveying direction (F) is conveyed exclusively mechanically.

6. A fine material cooler (22) for cooling bulk material, in particular cement clinker, with a fine material proportion of 70% to 95%, in particular 75% to 85%, preferably 80%, and a coarse material proportion of 5% to 30%, in particular 15% to 25%, preferably 20%,
wherein the fine material has a grain size of for instance 10⁻⁵ mm to 4 mm, comprising a material inlet (30) for admitting bulk material to be cooled into the fine material cooler (22), and
a material outlet (32) for discharging bulk material from the fine material cooler,
**characterized in that**
the fine material cooler (22) comprises a first, mechanical or pneumatic conveying unit for conveying coarse material and a second conveying unit for conveying fine material, and wherein the conveying units are formed for the purpose of conveying the bulk material in the conveying direction (F) through the fine material cooler (22) to the material outlet (32).

7. The fine material cooler (22) as claimed in claim 6 , wherein the second conveying unit is a pneumatic conveying unit.

8. The fine material cooler (22) as claimed in claim 6 or 7, wherein the mechanical conveying unit (42) comprises a plurality of conveying elements, which can be moved simultaneously in the conveying direction (F) and non-simultaneously counter to the conveying direction (F).

9. The fine material cooler (22) as claimed in one of claims 6 to 8, wherein the pneumatic conveying unit for conveying the fine material (54) comprises a plurality of fans (38, 40) for applying a cooling air flow to the fine material.

10. The fine material cooler (22) as claimed in claim 6, wherein the pneumatic conveying unit for conveying the coarse material in the conveying direction (F) comprises a compressed-air device (66) for applying compressed air to the coarse material (52).

11. The fine material cooler (22) as claimed in one of claims 6 to 10, wherein a plurality of conducting elements (58) for conducting the fine material (54) within the fine material cooler (22) are arranged in the fine material cooler (22).

12. The fine material cooler (22) as claimed in one of claims 6 to 11, wherein the fine material cooler (22) comprises a coarse material outlet (62) for discharging coarse material (52) from the fine material cooler (22) and a fine material outlet (32) for discharging fine material (54) from the fine material cooler (22).

13. A cooler (10) for cooling bulk material, comprising
a cooler inlet (12) for admitting bulk material to be cooled into the cooler (10), a separation region (16), which is arranged downstream of the cooler inlet (12) in the conveying direction (F) of the bulk material, for separating coarse material and fine material,
a coarse material cooler (20) following the separation region (16), for cooling the coarse material, wherein the coarse material has a grain size of 4 mm to 100 mm, and a fine material cooler (22) as claimed in one of claims 6 to 12following the separation region (16) and is arranged parallel to the coarse material cooler (20), for cooling the fine material, wherein the fine material has a grain size of for instance 10⁻⁵ mm to 4 mm.

## Revendications

1. Procédé de refroidissement d'un matériau en vrac, en particulier de clinker de ciment, dans un dispositif de refroidissement de matériau fin (2210), comprenant les étapes :
- introduction du matériau en vrac à refroidir, ayant une proportion de matériau fin de 70 % à 95 %, en particulier de 75 % à 85 %, de préférence de 80 %, et une proportion de matériau grossier de 5 % à 30 %, en particulier de 25 % à 15 %, de préférence de 20 %, à travers une entrée de matériau (30), dans le dispositif de refroidissement de matériau fin (22), dans lequel le matériau fin présente une granulométrie d'environ 10⁻⁵ mm à 4 mm et le matériau grossier présente une granulométrie de 4 mm à 100 mm,
- convoyage du matériau grossier avec une première unité de convoyage mécanique ou pneumatique et convoyage du matériau fin avec une deuxième unité de convoyage dans la direction de convoyage (F) à travers le dispositif de refroidissement de matériau fin (22) vers une sortie de matériau (32).

2. Procédé selon la revendication 1, dans lequel le matériau fin du matériau en vrac est convoyé de manière pneumatique.

3. Procédé selon la revendication 1 ou 2, dans lequel de l'air comprimé est conduit dans le dispositif de refroidissement matériau fin (22) par l'intermédiaire d'entrées d'air comprimé (66) orientées dans la direction de convoyage (F) et le matériau grossier est transporté dans la direction de convoyage (F) au moyen de l'air comprimé.

4. Procédé selon l'une quelconque des revendications précédentes, dans lequel le matériau grossier (52) et le matériau fin (54) sont sortis séparément du dispositif de refroidissement de matériau fin (22).

5. Procédé selon l'une quelconque des revendications précédentes, dans lequel le matériau en vrac est convoyé exclusivement mécaniquement dans une partie arrière, vue dans la direction de convoyage (F), du dispositif de refroidissement de matériau fin (22).

6. Dispositif de refroidissement de matériau fin (22) pour le refroidissement d'un matériau en vrac, en particulier de clinker de ciment, ayant une proportion de matériau fin de 70 % à 95 %, en particulier de 75 % à 85 %, de préférence de 80 %, et une proportion de matériau grossier de 5 % à 30 %, en particulier particulièrement de 25 % à 15 %, de préférence de 20 %,
dans lequel le matériau fin présente une granulométrie d'environ 10⁻⁵ mm à 4 mm, comprenant une entrée de matériau (30) pour l'entrée du matériau en vrac à refroidir dans le dispositif de refroidissement de matériau fin (22) et
une sortie de matériau (32) pour la sortie de matériau en vrac hors du dispositif de refroidissement de matériau fin,
**caractérisé en ce que**
le dispositif de refroidissement de matériau fin (22) comprend une première unité de convoyage mécanique ou pneumatique pour le convoyage de matériau grossier et une deuxième unité de convoyage pour le convoyage de matériau fin et dans lequel les unités de convoyage sont conçues pour le convoyage du matériau en vrac dans la direction de convoyage (F) à travers le dispositif de refroidissement de matériau fin (22) vers la sortie de matériau (32).

7. Dispositif de refroidissement de matériau fin (22) selon la revendication 6, dans lequel la deuxième unité de convoyage est une unité de convoyage pneumatique.

8. Dispositif de refroidissement de matériau fin (22) selon la revendication 6 ou 7, dans lequel l'unité de convoyage mécanique (42) comprend une pluralité d'éléments de convoyage qui peuvent être déplacés simultanément dans la direction de convoyage (F) et de manière non simultanée à l'opposé de la direction de convoyage (F).

9. Dispositif de refroidissement de matériau fin (22) selon l'une quelconque des revendications 6 à 8, dans lequel l'unité de convoyage pneumatique comprend, pour le convoyage du matériau fin (54), une pluralité de ventilateurs (38, 40) pour l'alimentation du matériau fin avec un flux d'air de refroidissement.

10. Dispositif de refroidissement de matériau fin (22) selon la revendication 6, dans lequel l'unité de convoyage pneumatique comprend, pour le convoyage du matériau grossier dans la direction de convoyage (F), un dispositif à air comprimé (66) pour l'alimentation du matériau grossier (52) avec de l'air comprimé.

11. Dispositif de refroidissement de matériau fin (22) selon l'une quelconque des revendications 6 à 10, dans lequel, dans le dispositif de refroidissement de matériau fin (22), sont disposés une pluralité d'éléments de guidage (58) pour le guidage du matériau fin (54) à l'intérieur du dispositif de refroidissement de matériau fin (22).

12. Dispositif de refroidissement de matériau fin (22) selon l'une quelconque des revendications 6 à 11, dans lequel le dispositif de refroidissement de matériau fin (22) comprend une sortie de matériau grossier (62) pour la sortie de matériau grossier (52) hors du dispositif de refroidissement de matériau fin (22) et une sortie de matériau fin (32) pour la sortie de matériau fin (54) hors du dispositif de refroidissement de matériau fin (22) .

13. Dispositif de refroidissement (10) pour le refroidissement de matériau en vrac, comprenant
une entrée (12) de dispositif de refroidissement pour l'entrée de matériau en vrac à refroidir dans le dispositif de refroidissement (10), une zone de séparation (16), disposée derrière l'entrée (12) du dispositif de refroidissement, vue dans la direction de convoyage (F) du matériau en vrac, pour la séparation du matériau grossier et du matériau fin,
un dispositif de refroidissement de matériau grossier (20) disposé à la suite de la zone de séparation (16), pour le refroidissement du matériau grossier, dans lequel le matériau grossier présente une granulométrie de 4 mm à 100 mm et
un dispositif de refroidissement de matériau fin (22), disposé à la suite de la zone de séparation (16) et branché en parallèle par rapport au dispositif de refroidissement de matériau grossier (20), selon l'une quelconque des revendications 6 à 12, pour le refroidissement du matériau fin, dans lequel le matériau fin présente une granulométrie d'environ 10⁻⁵ mm à 4 mm.
